Europäisches Patentamt

(19) **European Patent Office**

**Office européen des brevets**

(11) Publication number: **0 055 119**
A1

(12) # EUROPEAN PATENT APPLICATION

(21) Application number: **81306008.4**

(22) Date of filing: **21.12.81**

(51) Int. Cl.³: **F 16 J 15/46,** B 29 H 7/03, G 01 M 3/28

(30) Priority: **19.12.80 GB 8040723**

(43) Date of publication of application: **30.06.82**
Bulletin 82/26

(84) Designated Contracting States: **DE FR GB IT NL SE**

(71) Applicant: **J.M. HENSHAW (MARINE) LIMITED, Verrington Lodge, Wincanton Somerset (GB)**

(72) Inventor: **Millard, Dawayne Charles, 6 Earls Barton Road, Mears Ashby Northants (GB)**
Inventor: **Henshaw, John Mayon, Verrington Lodge, Wincanton Somerset (GB)**

(74) Representative: **Wain, Christopher Paul et al, A.A. THORNTON & CO. Northumberland House 303-306 High Holborn, London WC1V 7LE (GB)**

(54) **Inflatable sealing devices.**

(57) A sealing device which comprises a circumferential, ring-like inflatable portion for inflation to seal by its outer circumferential wall against a pipe, tube or duct into which it is inserted, is fabricated by joining together a plurality of pieces of sheet material (10–13, 20, 32, 34) on a ring-shaped former (1, 2) to fabricate the ring-like portion but with a peripheral split (30) around its outer circumferential wall, then removing the fabricated inflatable portion from the former, and closing the outer circumferential wall around the peripheral split.

- 1 -

## INFLATABLE SEALING DEVICES

This invention relates to inflatable sealing devices comprising a circumferential, ring-like inflatable portion for inflation to seal around a pipe, tube or duct into which it is to be inserted.

British patent specification 1 593 434 describes the use of such devices to seal the opposite ends of a length of pipe in civil engineering applications (the central apertures of the devices being closed over in this case), so that the integrity of the length of pipe between the sealing devices may be tested. The sealing devices may be constructed and used for other purposes: the ring-like inflatable portion need not be circular but instead may be of appropriate natural outer shape to correspond to the cross-sectional shape of the pipe, tube or duct which it is to seal.

In accordance with the present invention, there is provided a method of fabricating a sealing device which comprises a circumferential, ring-like inflatable portion for inflation to seal by its outer circumferential wall against a pipe, tube or duct into which it is to be inserted, the method of fabrication comprising joining together a plurality of pieces of sheet material on a ring-shaped former to fabricate the ring-like inflatable portion of the sealing device but with a peripheral split around its outer circumferential wall, then removing the fabricated inflatable portion from the former, and closing the outer circumferential wall around said peripheral split.

The inflatable portion may be removed from the former by passing the inflatable portion through the central aperture of the former. The former may be divided into two ring-shaped parts, so that the two opposite sides of the sealing device inflatable portion may be fabricated separately on the two parts of the former, whereafter the parts of the former are placed together and the inner and outer circumferential walls of the inflatable portion fabricated and joined to the two opposite sides.

Also in accordance with the present invention, there is provided a sealing device for testing the integrity of a join between two pipes, this sealing device comprising a circumferential, ring-like inflatable portion having its outer circumferential wall formed with two peripherally-extending projections for sealing (upon inflation of the inflatable portion) against the respective pipes at their join, a peripherally-extending space remaining between said projections for registering with the joined ends of the pipes, and an inlet for admitting fluid under pressure to said space.

Embodiments of the present invention will now be described, by way of examples only, with reference to the accompanying drawings, in which:

FIGURE 1 is a cut-away perspective view of a sealing device in course of fabrication on a ring-shaped former; and

FIGURE 2 is a cross-section through a sealing device for testing a pipe join.

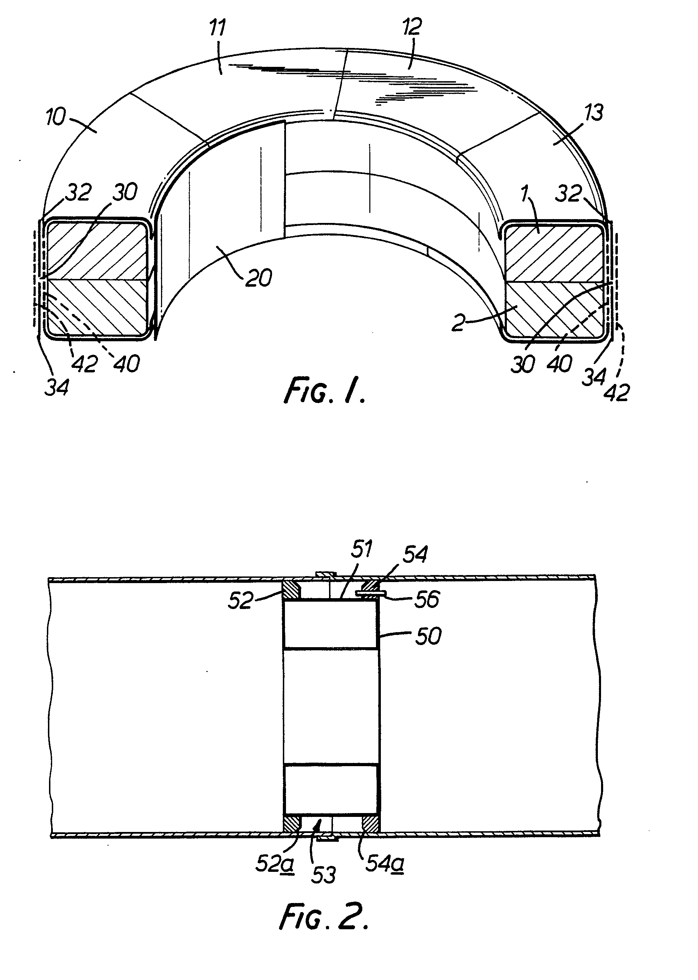

Referring to Figure 1, the sealing device in course

0055119

of fabrication comprises a circular or annular inflatable portion of substantially square cross-section, but other overall and cross-sectional shapes are envisaged. The former is similarly (in the example shown) annular and of a substantially square cross-section, and moreover is divided into two annular parts 1,2.

The sealing device is fabricated from pieces of sheet rubber or synthetic elastomer cut to shape and size and joined together on the former by adhesive. One side of the sealing device is fabricated of pieces 10,11,12,13 etc overlapping each other and joined together over part 1 of the former, and the other side of the sealing devices is similarly fabricated over part 2 (prior to turning this part over to the disposition shown). It will be noted that the pieces of sheet material forming the opposite sides of the sealing device have their margins turned over the inner and outer circumferential walls of the former.

Next the two parts of the former are placed together as shown and they may be registered together by interengaging formations such as pins and sockets. Then the inner circumferential wall of the sealing device may be fabricated and this is carried out by joining one or more further pieces (e.g. 20) of sheet material to the side pieces 10,11,12,13 etc, such as to overlap the turned-down margins of those pieces. Also, the outer circumferential wall of the sealing device may be fabricated, but this is carried out so as to result (at this stage) in a peripheral split 30 around it. Thus, one or more pieces 32 of material are joined together and to the pieces 10,11,12,13 etc of one side and one or more pieces 34 of material are joined together and to the corresponding pieces of the other side of the device. If the sealing device is to be provided with a membrane sealing over the central aperture of its ring-like inflatable portion, this may be applied at this stage, the membrane comprising a circular piece of the sheet material joined in position and to the pieces of one side of the sealing device by adhesive. A unit, complete with a valved tube for pumping air into a length of pipe to be tested and a tube for coupling a manometer to monitor pressure variations within the pipe, may be joined by adhesive over an aperture cut in the membrane to receive this unit. The sealing device is now at this stage illustrated.

The sealing device may next be removed from the former 1,2 by passing the sealing device, with appropriate flexing of it, through the central aperture of the former. It now remains to close the split periphery of the sealing device and this is carried out by adhering a strip 40 over the split but on the inner side of the inflatable portion outer wall and a strip 42 over the split on the outer side of the inflatable portion outer wall. The strips 40,42 are shown in dotted lines because they are not applied at the stage illustrated. For a substantial proportion of the length of this outer wall periphery, say 90%, there is no difficulty in applying these strips, a small former being inserted through the peripheral split to support the inner strip 40. However, the final 10% must be carried out without the aid of this small former.

Figure 2 shows a sealing device with ring-like inflatable portion, not necessarily fabricated by the above method, for use in pipe-joint testing. This sealing device is shown in position at the pipe-joint, but prior to inflation. The ring-like inflatable portion 50 does not require a membrane to seal its central aperture, but the outer circumferential wall is formed with two peripherally-extending projections 52,54. In the embodiment shown, these comprise solid rings of rubber or synthetic elastomer secured in position by adhesive, each ring being square in cross-section, as shown, but with its radially outer, axially inner corner chamfered as shown at 52a, 54a. A tube 56 passes through ring 54 to enable fluid under pressure to be admitted to the space between the rings.

In use, the sealing device is inflated so that the rings 52,54 seal around their peripheries to the respective pipes, so that the space therebetween is sealed, providing the integrity of the pipe-join is sound. Because the outer wall 51 of the sealing device will bulge upon inflation, the rings 52,54 will be deformed axially outwards, such that the chamfered surfaces at 52a,54a will seal flat against the respective pipes. The tube 56 is used to admit fluid under pressure to the space 53 between the rings, and to monitor any drop in pressure (which would indicate a leaky pipe join).

Although not shown, the four circumferential edges of the sealing device are reinforced by a strip of material placed on each edge of the former before the pieces 10-13 etc are applied (and bonded to such strips). Also, a further strip (being the full width of outer circumferential wall of the device) is finally applied over the strip 42.

In a modification of the sealing devices, an inflatable inner tube may be inserted into the ring-like inflatable portion (before the outer circumferential wall of the latter is closed around its peripheral split), an inflation valve of the inner tube projecting through a side of the ring-like inflatable portion. The sealing device is thus inflated by inflating the inner tube, thus overcoming any possible suspicion that any failure of a test might be due to any slight leak in a wall of the ring-like portion of the device.

0055119

CLAIMS

1.      A method of fabricating a sealing device which comprises a circumferential, ring-like inflatable portion for inflation to seal by its outer circumferential wall against a pipe, tube or duct into which it is to be inserted, the method of fabrication comprising joining together a plurality of pieces of sheet material on a ring-shaped former to fabricate the ring-like inflatable portion of the sealing device but with a peripheral split around its outer circumferential wall, then removing the fabricated inflatable portion from the former, and closing the outer circumferential wall around said peripheral split.

2.      A method as claimed in claim 1, in which the step of removing the fabricated inflatable portion from the former comprises passing the inflatable portion through the central aperture of the former.

3.      A method as claimed in claim 1 or 2, in which the former is divided into two ring-shaped parts, and the two opposite sides of the inflatable portion are fabricated separately on the two parts of the former, whereafter these two parts are placed together and the inner and outer circumferential walls of the inflatable portion are fabricated and joined to the two opposite sides.

4.      A method as claimed in any preceding claim, further comprising inserting an inflatable inner tube into the ring-like inflatable portion.

5.      A method as claimed in any preceding claim, comprising providing the outer circumferential wall with two peripherally-extending projections which are spaced apart in the axial direction of the ring-like inflatable portion.

FIG. 1.

FIG. 2.

## European Patent Office

# EUROPEAN SEARCH REPORT

Application number

EP 81 30 6008.4

| Category | Citation of document with indication, where appropriate, of relevant passages | Relevant to claim |
|---|---|---|
| A | <u>DE - A - 2 304 171</u> (DEUTSCHE SEMPERIT GMBH)<br>* claim 1; fig. 1, 2 * | 1 |
| | -- | |
| A | <u>DE - U - 7 236 506</u> (GUMMI-JÄGER KG)<br>* claims 1, 4; fig. 4 to 6 * | 1 |
| | -- | |
| A | <u>DE - A   2 024 833</u> (DYNAMIT NOBEL AG) | |
| | -- | |
| A | <u>DE - U - 7 432 866</u> (H. BRAUN) | |
| | -- | |
| P,A,<br>D | <u>GB - A - 1 593 434</u> (D.C. MILLARD) | |
| | ---- | |

### DOCUMENTS CONSIDERED TO BE RELEVANT

### CLASSIFICATION OF THE APPLICATION (Int. Cl.³)

F 16 J 15/46

B 29 H 7/03

G 01 M 3/28

### TECHNICAL FIELDS SEARCHED (Int. Cl.³)

B 29 H 7/00

F 16 J 15/00

F·16 L 55/00

G 01 M 3/00

### CATEGORY OF CITED DOCUMENTS

X: particularly relevant

A: technological background

O: non-written disclosure .

P: intermediate document

T: theory or principle underlying the invention

E: conflicting application

D: document cited in the application

L: citation for other reasons

&: member of the same patent family, corresponding document

X The present search report has been drawn up for all claims

| Place of search | Date of completion of the search | Examiner |
|---|---|---|
| Berlin | 12-02-1982 | MASSALSKI |

EPO Form 1503.1 06.78